## Europäisches Patentamt

## European Patent Office

## Office européen des brevets

(19)

(11) Veröffentlichungsnummer: **0 243 535**
**B1**

(12) **EUROPÄISCHE PATENTSCHRIFT**

(45) Veröffentlichungstag der Patentschrift:
**28.02.90**

(51) Int. Cl.⁴: **C12F 1/00, C12G 3/12**

(21) Anmeldenummer: **86113721.4**

(22) Anmeldetag: **03.10.86**

(54) **Verfahren und Vorrichtung zur chargenweisen Gewinnung von Branntwein.**

(30) Priorität: **29.04.86 LU 86413**
**13.05.86 LU 86427**

(43) Veröffentlichungstag der Anmeldung:
**04.11.87 Patentblatt 87/45**

(45) Bekanntmachung des Hinweises auf die Patenterteilung:
**28.02.90 Patentblatt 90/9**

(84) Benannte Vertragsstaaten:
**AT BE CH DE ES FR GB GR IT LI LU NL SE**

(56) Entgegenhaltungen:
**DE-A- 1 792 097**
**DE-A- 2 311 428**
**DE-A- 3 241 493**
**DE-B- 1 134 966**
**FR-A- 766 465**
**FR-A- 1 038 520**
**FR-A- 1 568 336**
**FR-A- 2 040 682**
**FR-A- 2 312 562**
**FR-A- 2 432 547**

(73) Patentinhaber: **Ziegler, Thomas Alfred,
Hindenburgstrasse 5, D-6982 Freudenberg(DE)**

(72) Erfinder: **Ziegler, Thomas Alfred, Hindenburgstrasse 5,
D-6982 Freudenberg(DE)**

(74) Vertreter: **Hach, Hans Karl, Dr., Tarunstrasse 23,
D-6950 Mosbach-Waldstadt(DE)**

## Beschreibung

Die Erfindung betrifft eine Verfahren zur chargenweisen Gewinnung von Branntwein, bei welchem vergorene Früchte oder Fruchtsäfte unter Bildung von Rohdampf erhitzt, der Rohdampf in einer vorzugsweise als Destillationskolonne ausgebildeten Abscheidestrecke von Fuselprodukten gereinigt und an einer Kühlfläche kondensiert wird und Vorlauf des Destillats an einer gesonderten Kühlfläche niedergeschlagen wird und eine Vorrichtung zur Ausübung dieses Verfahrens.

Aus der DE 3 241 493 A-1 ist ein Verfahren der eingangs genannten Art bekannt, bei dem die Rohdämpfe einem Vorabscheider zugeleitet werden, in welchem der Vorlauf des Rohdampfes in die leichter flüchtigen und die schwerer flüchtigen Bestandteile getrennt wird und diese dann verschiedenen Kühlflächen zugeführt werden.

Aus der FR-A 2 432 547 ist ein ähnliches Verfahren bekannt, bei dem ebenfalls leichter flüchtige Bestandteile des Rohdampfes separat niedergeschlagen werden.

Steinobstdestillate enthalten gesundheitsschädliches Ethylcarbamat (Urethan). Ethylcarbamant destilliert im Nachlauf. Es tritt aber auch im Vorlauf auf, weil Ethylcarbamat Rohdampf führende Geistleistungen verunreinigt und Restbestände davon mit dem nachfolgenden Vorlauf mitgerissen werden. Einer solchen Verunreinigung des Vorlaufs kann man entgegenwirken, indem man die fraglichen Niederschläge nach jedem Durchlauf auswäscht. Das gelingt aber, wenn man nicht untragbaren Aufwand in Kauf nehmen will, in der Praxis nur mangelhaft.

Aufgabe der Erfindung ist es, ein Vefahren und eine Vorrichtung der eingangs genannten Art so auszugestalten, daß Ethylcarbamat und andere schädliche Substanzen mit ähnlichem Destillierverhalten auf einfache Weise vom fertigen Destillat möglichst ferngehalten werden.

Die Erfindung ist dadurch gekennzeichnet, daß das Destillat eines jeden Durchlaufs in drei, den Vorlauf, den Mittellauf und den Nachlauf bildende Fraktionen getrennt wird, die jeweils das gesamte in einem zugehörigen Zeitabschnitt anfallende Destillat umfassen, und daß der Vorlauf und der Nachlauf einerseits und der Mittellauf andererseits an verschiedenen, räumlich voneinander getrennten und durch mindestens ein Absperrorgan zuströmseitig gegeneinander absperrbare Kühlflächen kondensiert und getrennt abgeleitet wird.

Das gewünschte reine Destillat ist dann das vom Mittellauf gewonnene. Bei der gesonderten Behandlung des Nachlaufs werden die im Nachlauf enthaltenen Schadstoffe von dem Destillat des Mittellaufs ferngehalten. Diejenigen Schadstoffe, die sich im Leitungssystem niedergeschlagen haben, werden durch den Vorlauf des nachfolgenden Durchlaufs mitgerissen und durch die Sonderbehandlung des Vorlaufs ebenfalls vom Destillat des Mittellaufs ferngehalten. Da die Fraktionen zeitlich voneinander getrennt sind, kann man durch den Zeitpunkt der Umschaltung von Vorlauf auf Mittellauf beziehungsweise von Mittellauf auf Nachlauf die Größe der einzelnen Fraktionen bestimmen und dadurch auch sicherstellen, daß der Mittellauf hinreichend frei von den fraglichen Schadstoffen ist.

Es empfiehlt sich, daß der Rohdampf in der Vor- und Nachlaufphase vor Eintritt in die Abscheidestrecke abgezweigt und unmittelbar an der zugehörigen Kühlfläche kondensiert wird.

Wenn man auf der sicheren Seite destilliert, also den Vorlauf und Nachlauf mit Toleranzzugabe sehr groß wählt, kann man dennoch Verluste vermeiden, indem man den Vor- und Nachlauf unter Verwendung der vorgenannten Verfahrensschritte vollständig nachdestilliert.

Die Erfindung betrifft auch eine Vorrichtung zum Gewinnen von Branntwein aus vergorener Brennmaische mit einer Rohbrandblase zum Destillieren der Brennmaische, mit einem Abscheider zum Reinigen des Dampfes von Fusel, der über eine dampffördernde, erste Geistleitung an die Rohbrandblase angeschlossen ist, und mit einem Kondensator zum Kondensieren des gereinigten Dampfes, der über eine den gereinigten Dampf fördernde, zweite Geistleitung an den Abscheider angeschlossen ist.

Eine weitere Aufgabe der Erfindung ist es, eine Vorrichtung dieser Art so auszugestalten, daß mit einfachem konstruktiven Aufwand und auch mit einfacher Bedienung entsprechend wie bei dem eingangs genannten Verfahren die genannten schädlichen Verunreinigungen möglichst nicht in den fertigen Branntwein gelangen.

Diese Aufgabe wird dadurch gelöst, daß ein Rohbrandkondensator vorgesehen ist und daß in der ersten Geistleitung ein Umschaltventil vorgesehen ist, über das diese erste Geistleitung wahlweise an die Eingangsseite des Abscheiders oder des Rohbrandkondensators anschließbar ist.

Durch einfaches Umschalten des Umschaltventils, das zum Beispiel ein Dreiwegeventil sein kann, läßt sich der Vorlauf und Nachlauf von der weiteren Verarbeitung zu dem Branntwein aussondern. Besonders vorteilhaft ist es, daß dann der Vor- und Nachlauf, der die schädlichen Substanzen enthält, gar nicht in den Abscheider gelangt, so daß sich im Abscheider beim Abscheidevorgang auch keine schädlichen Substanzen aussondern können, die von dem Mittellauf wieder aufgenommen werden können und dann mit dem Mittellauf in den Branntwein gelangen.

Insbesondere für eine Verschlußbrennerei, aber auch für einfache Brennereien empfiehlt es sich, daß ein Kondensatsammelbehälter vorgesehen ist, der unter Zwischensschaltung einer Destilliervorlage an die Ausgangsseite des Kondensators angeschlossen ist, und daß ein Fuselsammelbehälter vorgesehen ist, der unter Zwischenschaltung einer Destilliervorlage an die Ausgangsseite des Rohbrandkondensators angeschlossen ist.

In dem Abscheider sollen die schwer verdampfenden Fuselöle ausgeschieden werden. Dazu empfiehlt es sich, daß der obere Teil des Abscheiders als Durchlaufkühler ausgebildet ist, dessen anfallendes Kondensat nach unten tropft.

Bei Betrieb wird der Abscheider verunreinigt, muß also von Zeit zu Zeit gereinigt werden. Eine weitere Aufgabe ist es, eine Vorrichtung der oben genannten Art so auszugestalten, daß die unerwünschten Fuselöle auf einfache Weise möglichst vollständig ausgeschieden werden können und daß auch eine bequeme Reinigung möglich ist.

Eine erste Lösung dieser Aufgabe ist dadurch gekennzeichnet, daß der Abscheider ein langgestreckter, aufrechter, geschlossener Behälter ist, an dessen unterem Ende der Zulauf für den Dampf und an dessen oberem Ende ein Ablauf für den gereinigten Dampf vorgesehen ist, daß im unteren Teil des Behälters übereinander mehrere Trennstufen vorgesehen sind, daß jede Trennstufe eine an der Behälterwandung angrenzende, ringförmige, oben offene Schale aufweist, sowie eine sich nur über den mittleren Querschnittsteil des Behälters erstreckende, mit der offenen Seite nach unten weisende Wanne aufweist, die über der Schale angeordnet ist und mit ihrem unteren Rand mit Spiel in die Schale taucht, so daß zwischen dem inneren Rand der Schale und dem unteren Rand der Wanne ein labyrinthartiger Durchgang für den hochsteigenden Dampf offenbleibt, der syphonartig abgesperrt sein kann durch sich in der Schale sammelnden Fusel, daß für jede Trennstufe ein an eine äußere Druckwasserleitung anschließbarer Brausekopf vorgesehen ist, der zentral von unten in die Wanne reicht, und daß für jede ringförmige Schale ein absperrbarer, nach außen führender Fuselabfluß vorgesehen ist, der in den Fuselsammelbehälter führt.

Wenn das Durchlaufverfahren beendet ist, steht in den ringförmigen Schalen noch Fuselöl. Das kann dann einfach durch Einsprühen von Wasser durch die Brauseköpfe ausgetrieben werden, wodurch gleichzeitig die einzelnen Trennstufen ausgespült und damit gereinigt werden.

Diese erste Lösung ist vorzugsweise für Verschlußbrennereien vorgesehen, sie ist aber auch bei einfacheren Brennereien anwendbar. Eine zweite Lösung der genannten Aufgabe, die vorzugsweise für einfachere Brennereien, insbesondere sogenannte Abfindungsbrennereien, vorgesehen ist, ist dadurch gekennzeichnet, daß der Abscheider ein langgestreckter, aufrechter, geschlossener Behälter ist, an dessen unterem Teil der Zulauf für den Dampf und an dessen oberem Ende ein Ablauf für den gereinigten Dampf vorgesehen ist, daß das oberste Ende des Behälters ein erster freier Raum ist, der sich über den ganzen Querschnitt des Behälters erstreckt, daß der untere Teil des Behälters ein zweiter freier Raum ist, der sich über den ganzen Querschnitt des Behälters erstrckt, und daß mindestens in einem der freien Räume ein Brausekopf angeordnet ist, der an eine äußere Druckwasserleitung anschließbar ist.

Einige wenige, leicht flüchtige Bestandteile, die unerwünscht sind, gelangen unter Umständen auch mit dem Mittellauf in den Kondensatsammelbehälter, in dem sich der fertige Branntwein sammeln soll. Um diese unerwünschten Bestandteile aus dem fertigen Branntwein auszuscheiden, empfiehlt est sich, daß der Kondensatsammelbehälter ein geschlossener Behälter ist, der mit einem Rührwerk ausgestattet ist, und daß oben an dem Kondensatsammelbehälter ein Dampfauslaß vorgesehen ist.

Die Erfindung wird nun anhand der beigefügten Zeichnung näher erläutert.

In der Zeichnung zeigt:

Figur 1 eine Brennanlage,
Figur 2 im Teilschnitt einen Abscheider aus dieser Brennanlage,
Figur 3 ein Fließschema zu der Brennanlage aus Figur 1,
Figur 4 - 7 je ein anderes Ausführungsbeispiel einer Brennanlage, das einfacher ausgestaltet ist, als das aus Figur 1 und
Figur 8 im Teilschnitt einen Abscheider, wie er bei den Brennanlagen nach Figur 1 und Figur 4 - 7 einsetzbar ist.

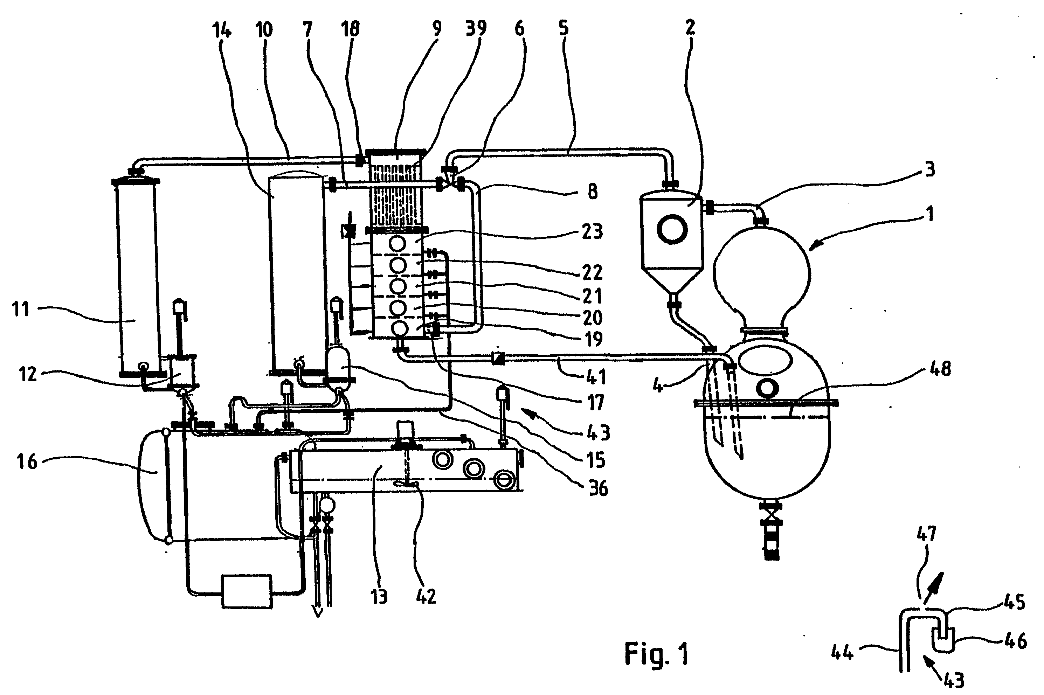

In Figur 1 bis 3 ist mit 1 eine Rohrbrandblase bezeichnet, die zum Destillieren von Brennmaische dient. Mit 2 ist ein Vorabscheider bezeichnet, der über eine Geistleitung 3 an die Rohrbrandblase 1 angeschlossen ist une dessen Abscheideleitung 4 in die Rohrbrandblase 1 zurückführt. Mit 5 ist die erste Geistleitung bezeichnet, die den von der Rohrbrandblase ausgehenden Dampf, der den Vorabscheider passiert hat, an ein Dreiwegeventil 6 fördert. Im Dreiwegeventil 6 verzweigt sich die erste Geistleitung in einen ersten Zweig 7 und einen zweiten Zweig 8.

Der erste Zweig 7 mündet oben in einen Rohrbrandkondensator 14, an den unten unter Zwischenschaltung einer Destilliervorlage 15 ein Fuselsammelbehälter 16 angeschlossen ist.

Der zweite Zweig 8 mündet unten in einen Abscheider 9. Von dem Abscheider 9 geht oben die zweite Geistleitung 10 aus, die zu einem Kondensator 11 führt. An den Kondensator 11 ist unten unter Zwischenschaltung einer Destilliervorlage 12 ein Kondensatsammelbehälter 13 angeschlossen.

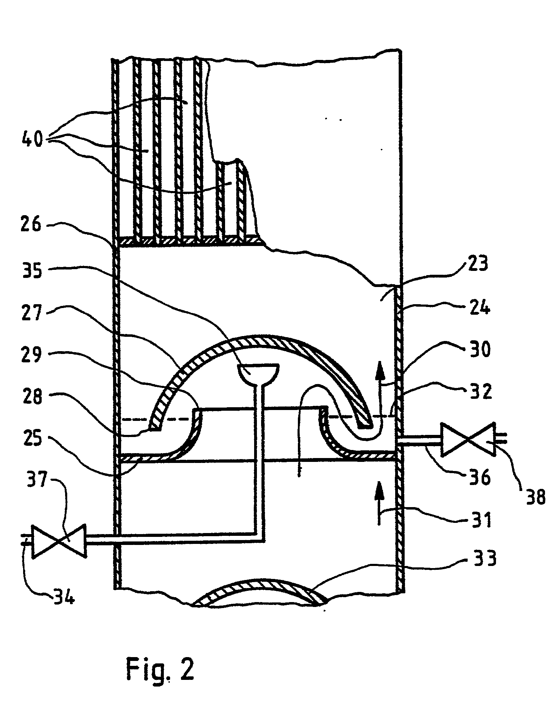

Der Abscheider 9 ist ein langgestreckter, aufrechter, geschlossener Behälter 26, an dessen unterem Ende der Zulauf 17 und an dessen oberem Ende der Ablauf 18 angeordnet ist. Der untere Teil des Behälters weist übereinander fünf Trennstufen 19 bis 23 auf. Für jede dieser Trennstufen ist ein Schauglas vorgesehen. Die Trennstufen sind unter sich gleich ausgebildet, wie zum Beispiel die Trennstufe 23, deren Ausgestaltung nun anhand der Figur 2 erläutert wird.

Die Trennstufe 23 weist eine an die Behälterwandung 24 angrenzende, ringförmige, oben offene Schale 25 auf. Außerdem ist eine sich nur über den mittleren Querschnittsteil des Behälters 26 erstreckende, mit der offenen Seite nach unten weisende Wanne 27 im Behälter über nicht dargestellte Befestigungsmittel befestigt. Die Wanne 27 ist über der Schale 25 angeordnet und taucht mit ihrem unteren Rand 28 mit Spiel in die Schale 25. Zwischen dem inneren Rand 29 der Schale 25 und dem unteren Rand 28 der Wanne 27 besteht ein labyrinthartiger Durchgang wie durch den Pfeil 30 angedeutet für den in Pfeilrichtung 31 hochsteigenden Dampf. Dieser labyrinthartige Durchgang kann syphonartig abgesperrt werden durch Fuselöl, das sich in der Schale 25 sammelt und dessen Spiegel durch die strichpunktierte Linie 32 beispielsweise angezeigt ist. Unter der Trennstufe 23 sieht man einen Teil der Wanne 33 der Trennstufe 22.

Für jede Trennstufe ist ein an eine äußere Druckwasserleitung 34 anschließbarer Brausekopf 35 vorgesehen, der zentral von unten in die Wanne 27 reicht. Außerdem ist für jede der ringförmigen Schalen, also auch wie für die Schale 25, ein absperrbarer, nach außen führender Fuselabfluß 36 vorgesehen, der in den Fuselsammelbehälter 16 führt.

Der Abscheider wird gereinigt wenn ein Destillierdurchlauf beendet ist. Zu diesem Zweck werden die Ventile 37 und 38 geöffnet und es wird Wasser durch den Brausekopf 35 in die Trennstufe 23 eingesprüht, das dann über die Schale 25 und den Fuselabfluß 36 mit dem restlichen Fuselöl und den Verschmutzungen abfließt in den Fuselsammelbehälter 16.

Der obere Teil des Abscheiders 9 ist als Durchlaufkühler 39 ausgebildet mit einem System von vertikalen parallel geschalteten Rohren 40, durch die der Dampf in Pfeilrichtung 31 nach oben zum Ablauf 18 strömen kann. Die Rohre 40 werden umspült von kaltem Wasser, so daß sehr flüchtige Bestandteile an den Rohrleitungswänden kondensieren und das Kondensat nach unten abtropft in die oberste Trennstufe 23.

Überschüssiges Fuselöl, das aus den der Schale 25 entsprechenden Schalen überläuft, tropft in die nächste tiefere Trennstufe und von da schließlich zum Boden des Abscheiders 9, von wo es über die Rückführungsleitung 41 in die Rohrbrandblase zurücklaufen kann.

Der Kondensatsammelbehälter 13 ist ein geschlossener Behälter, der mit einem Rührwerk 42 ausgestattet ist. Außerdem ist oben an dem Kondensatsammelbehälter ein Dampfauslaß 43 vorgesehen. Der Dampfauslaß 43 weist ein vertikales Steigrohr 44 auf, dessen oberes Ende U-förmig nach unten umgebogen ist und dessen freies Ende 45 in einen nach oben offenen Behälter 46 taucht. An dem U-Bogen ist oben eine Dampfaustrittsöffnung 47 vorgesehen. In dem Behälter 46 sammelt sich der den entweichenden Dampf begleitende Schmutz, der zu Kontrollzwecken aufgefangen wird.

Bei Beginn des Durchlaufbetriebes ist die Rohrbrandblase mit vergorener Brennmaische gefüllt, etwa bis an den durch die strichpunktierte Linie 58 angedeuteten Spiegel und wird beheizt. Diese Füllung mit vergorener Brennmaische wird durch Nachfüllen ständig aufrechterhalten. Bei Beginn des Durchlaufverfahrens entsteht zunächst der sogenannte Vorlauf des Dampfes. Während dieser Vorlauf entsteht, befindet sich das Breiwegeventil in einer Stellung, in der der Zweig 7 an die erste Geistleitung angeschlossen ist, sodaß der vorlaufende Dampf in den Rohrbrandkondensator 14 gelangt, dort kondensiert wird und dann in den Fuselsammelbehälter 16 gelangt. Von dort kann der Fusel anderer Verwendung zugeführt werden oder noch einmal der Destillation unterworfen werden. Das Dreiwegeventil 6 wird umgeschaltet, sobald der in der ersten Geistleitung strömende Dampf genügenden Reinheitsgrad hat. Das wird durch entsprechende Probeentnahmen kontrolliert und überwacht. Der nun folgende Mittellauf gelangt, nachdem das Dreiwegeventil inzwischen umgeschaltet ist, in den Zweig 8 und wird nun in dem Abscheider 9 gereinigt, im Kondensator 11 kondensiert, gelangt in den Kondensatsammelbehälter und wird dort noch vermittels des Rührwerkes 42 nachgereinigt.

Gegen Ende des Durchlaufverfahrens ist der Dampf in der ersten Geistleitung zunehmend verschmutzt und diese Geistpartie nennt man den Nachlauf, der dem auszuwertenden Mittellauf folgt. Dieser Nachlauf wird vom Abscheider 9 ferngehalten. Dazu wird die Qualität des in der ersten Geistleitung 5 strömenden Dampfes ständig überwacht und sobald Verschmutzungen festgestellt werden, wird das Dreiwegeventil wieder umgeschaltet, sodaß die erste Geistleitung an den Zweig 7 angeschlossen wird und der Nachlauf, ebenso wie der Vorlauf über den Rohrbrandkondensator 14 kondensiert und dann in den Fuselsammelbehälter 16 gelangt.

Nachdem die Brennmaischenfüllung der Rohrbrandblase 1 aufgearbeitet ist, wird die Rohrandblase 1 geleert, die Anlage wird gesäubert und ist dann bereit, eine neue Charge Brennmaische wie beschrieben zu verarbeiten.

Natürlich kann man mit einer solchen Anlage auch Partien des Mittellaufes, die vielleicht durch eine Betriebsstörung verunreinigt sind, vom Branntwein fernhalten, indem man bei Beginn der Partie das Dreiwegeventil 6 entsprechend umschaltet. Es genügt, den in der ersten Geistleitung 5 strömenden Dampf, beziehungsweise das daraus gewonnene Kondensat, durch Probeentnahmen am Abscheider 9 beziehungsweise am Rohrbrandkondensator 14 ständig in seiner Qualität zu überwachen. Wenn die Qualität unbefriedigend ist, kann das Dreiwegeventil 6 umgeschaltet werden, sodaß der schlechte Dampf nicht in den Branntwein und auch nicht in den Abscheider 9 gelangen kann, mithin diesen Abscheider auch nicht für die nachfolgenden Partien verschmutzen kann.

Im Kondensatsammelbehälter sammelt sich der fertige Branntwein. Für erforderliche Probeentnahmen sind an diversen Stellen der Anlage Probeentnahmehähne angebracht, die aber in der Zeichnung nicht dargestellt sind.

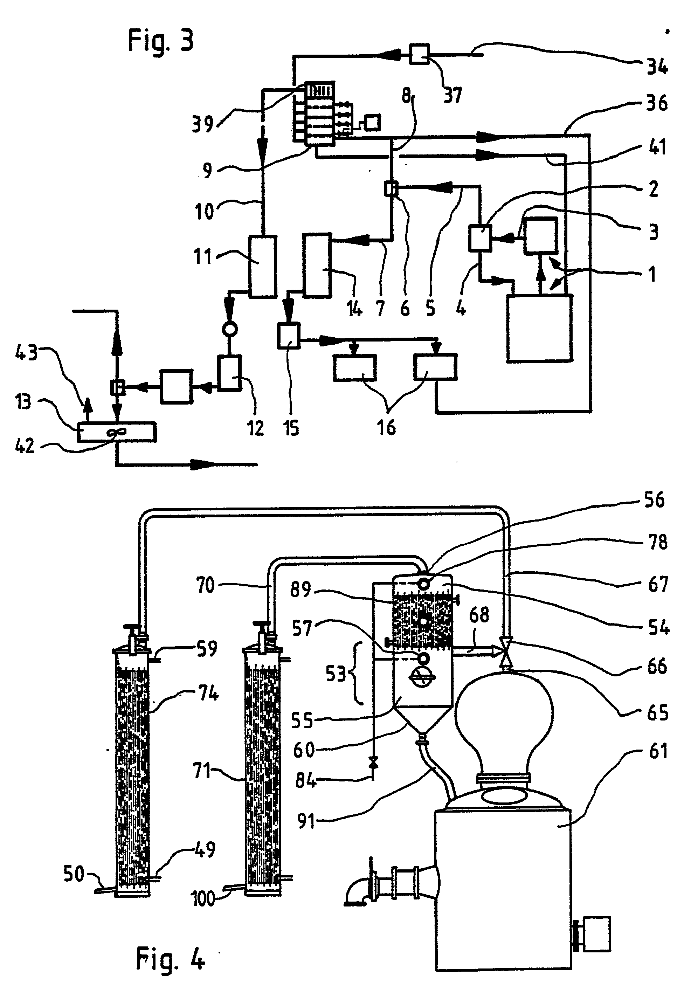

Bei dem in Figur 4 dargestellten Ausführungsbeispiel handelt es sich um ein gegenüber dem Ausführungsbeispiel nach Figur 1 bis 3 stark vereinfachtes Ausführungsbeispiel, das für sehr kleine Brennereien vorgesehen ist. Die mit 61 bezeichnete Rohrbrandblase entspricht der Rohrbrandblase 1 und dient zur Aufnahme der vergorenen Brennmaische und zum Destillieren derselben. Mit 65 ist eine erste Geistleitung bezeichnet, die den von der Rohrbrandblase ausgehenden Dampf an ein Dreiwegeventil 66 fördert. Im Dreiwegeventil 66 verzweigt sich die erste Geistleitung in einen ersten Zweig 67 und in einen zweiten Zweig 68.

Der erste Zweig 67 mündet oben in einen Rohrbrandkondensator 74, der dem Rohrbrandkondensator 14 entspricht. An den Rohrbrandkondensator 74 kann unten, gegebenenfalls unter Zwischenschaltung einer Destilliervorlage ein Fuselsammelbehälter angeschlossen sein, es kann aber auch einfach ein Fuselauffangbehälter unter den unten angeordneten Ablauf 49 gestellt werden. Mit 50 und 51 sind Anschlüsse für einen im Gegenstrom betriebenen Kühlwasserdurchlauf bezeichnet.

Der zweite Zweig 68 mündet in den unteren Teil 53 eines Abscheiders 69, der hinsichtlich seiner Funktion dem Abscheider 9 aus Figur 1 und 3 entspricht. Ein dem Vorabscheider 2 entsprechender Vorabscheider ist bei diesem Ausführungsbeispiel nicht vorgesehen.

Der Abscheider 69 ist ein langgestreckter, aufrechter, geschlossener Behälter, an dessen oberem Ende der Ablauf 78 für den gereinigten Dampf vorgesehen ist. Am obersten Ende des Abscheiders 69 ist ein erster freier Raum 54 vorgesehen, der sich über den ganzen Querschnitt des Behälters erstreckt. Den unteren Teil des Abscheiders 69 nimmt ein zweiter freier Raum 55 ein, der sich ebenfalls über den ganzen Querschnitt des Behälters erstreckt. In beiden freien Räumen ist je ein Brausekopf 56, 57 angeordnet, der an eine äußere Druckwasserleitung 84 anschließbar ist.

Im oberen Teil des Abschneiders 69 ist ein dem Durchlaufkühler 39 entsprechender Durchlaufkühler 89 vorgesehen, der wie der Durchlaufkühler 39 wie aus Figur 2 ersichtlich aus mehreren, parallel laufenden Steigrohren besteht, die von Kühlwasser umspült sind. Das untere Ende des Behälters 69 mündet über ein trichterförmiges Bodenteil 60 in eine Rückführungsleitung 91, die in die Rohrbrandblase 61 führt.

Von dem Ablauf 78 geht die zweite Geistleitung 70 aus, die zu dem Kondensator 71 führt, der genauso ausgebildet ist wie der Kondensator 11. Unten an dem Kondensator 71 fließt über den Abfluß 100 das Kondensat ab, das nun wie bei dem Ausführungsbeispiel nach Figur 1 bis 3 über eine Destilliervorlage in einen Kondensatsammelbehälter geleitet werden oder anderweitig aufgefangen werden kann.

Der Betrieb erfolgt entsprechend wie bei dem Ausführungsbeispiel nach Figur 1 bis 3. Bei Beginn des Durchlaufbetriebes wird während des Vorlaufs das Dreiwegeventil 66 so geschaltet, daß die erste Geistleitung 65 mit dem ersten zweig 67 verbunden ist und der Vorlauf im Rohrbrandkondensator kondensiert wird. Die gleiche Stellung hat das Dreiwegeventil 65 während des Nachlaufs. Beim Mittellauf dagegen ist die erste Geistleitung 65 mit dem zweiten Zweig 68 verbunden, so daß der Mittellauf zunächst in den Abscheider 69 gereinigt und dann im Kondensator 71 zum Branntwein kondensiert wird.

Wenn die Füllung der Rohrbrandblase aufgearbeitet ist, wird die Rohrbrandblase gereinigt und kann neu gefüllt werden. Außerdem wird der Abscheider gereinigt durch Einsprühen von Reinigungswasser über die Brauseköpfe 56, 57. Das Reinigungswasser fließt dann in die Rohrbrandblase 61 und kann von dort mit nach Reinigung der Rohrbrandblase abgeleitet werden.

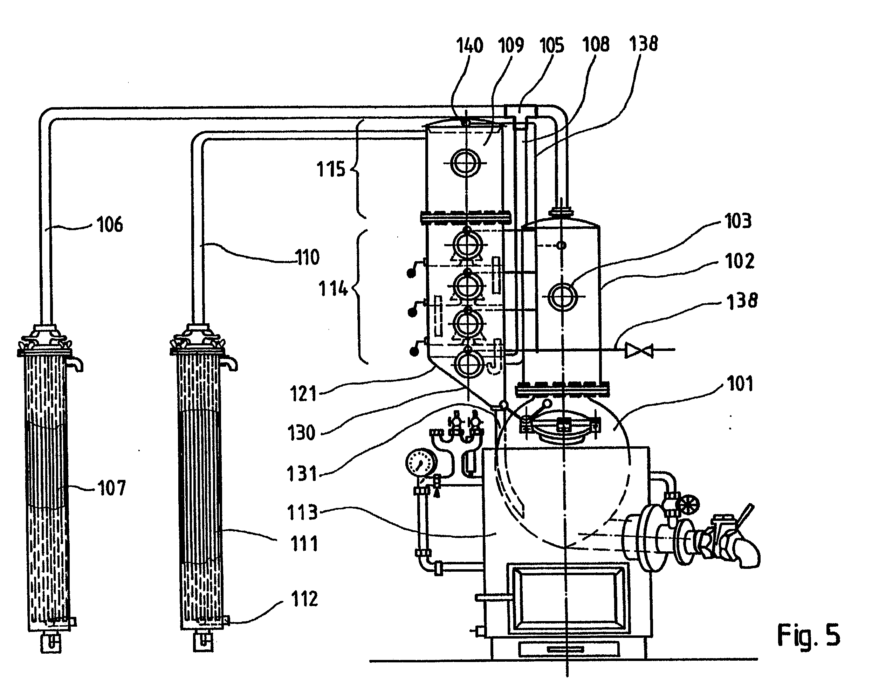

Nach Figur 5 ist mit 101 die Rohrbrandblase bezeichnet, auf der ein Brennkesselhut 102 mit Schauglas 103 sitzt. Vom oberen Ende des Brennkesselhutes geht oben die erste Geistleitung 104 aus, die zu einem Dreiwegeventil 105 führt. Von dem Dreiwegeventil führt ein erster Zweig 106 zu dem Rohrbrandkondensator 107 und ein zweiter Zweig 108 zu dem Abscheider 109. Der zweite Zweig 108 mündet am unteren Ende in den Abscheider und vom oberen Ende des Abscheiders geht die zweite Geistleitung 110 aus, die zu dem Kondensator 111 führt. Durch entsprechende Einstellung des Dreiwegeventils 105 gelangt der Vorlauf und der Nachlauf direkt an den Rohrbrandkondensator 107, wohingegen der Mittellauf an den Abscheider 109 und von da an den Kondensator 71 gelangt. Am Abfluß 112 des Kondensators kann der kondensierte Mittellauf als hochgradig reiner Trinkbranntwein entnommen werden. Am Ablauf des Rohrbrandkondensators fällt weniger reines Kondensat an, daß anderweitig verwendet, oder aber zur erneuten Destillation in die Rohrbrandblase zurückgeleitet werden kann.

Mit 113 ist ein Wasserbadkessel bezeichnet, mit dem die Rohrbrandblase 101 im Wasserbad aufgeheizt wird.

Der Abscheider 109 ist ein langgestreckter, aufrechter, geschlossener Behälter, dessen oberer Teil 115 einen dem Durchlaufkühler 39 entsprechenden Durchlaufkühler aufweist. Der untere Teil 114 des Behälters weist mehrere Trennstufen auf, die den Trennstufen 19 bis 23 aus Figur 1 entsprechen und zwischen denen Brausköpfe entsprechend dem Brausekopf 35 angeordnet, die an äußere Druckwasserleitung 116 angeschlossen sind.

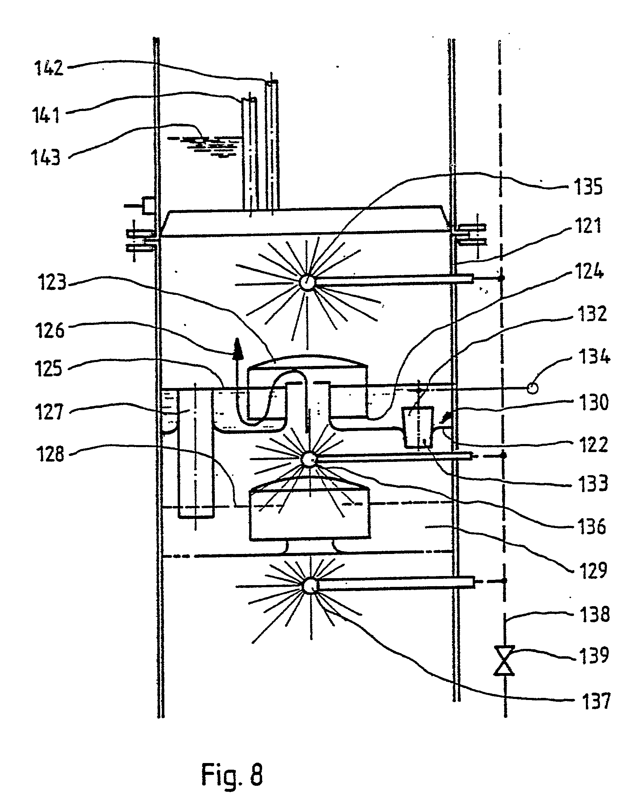

Der konstruktive Aufbau der Trennstufen unterscheidet sich von denen aus Figur 1, wie im folgenden anhand von Figur 8 erläutert wird. In Figur 8 ist ausgezeichnet die Trennstufe 120 dargestellt. Die Trennstufe 120 besteht aus einer an die Behälterwandung 121 angrenzenden, ringförmigen, nach oben offenen Schale 122. Eine sich nur über den mittleren Querschnittsbereich des Behälters 121 erstreckende Wanne 123 ist mit ihrer offenen Seite nach unten gerichtet über der Schale 122 angeordnet und zwar taucht sie mit ihrem unteren Rand 124 in die Flüssigkeitsfüllung 125 der Schale 122 syphonartig ein. Es bildet sich so für den von unten nach oben steigenden Dampf ein Weg entsprechend dem Pfeil 126 durch den syphonartigen Verschluß. Mit 127 ist ein Überlaufrohr bezeichnet, daß unten und oben offen ist und in die bis zu dem Flüssigkeitsspiel 128 reichende Flüssigkeitsfüllung, der darunter angeordneten Trennstufe 129 eintaucht. Das zu dieser nächst unteren Trennstufe gehörige Überlaufrohr, das dem Überlaufrohr 127 entspricht ist um einen kleinen Winkelbetrag im Umfang versetzt angeordnet, sodaß es dem Überlaufrohr 127 nicht im Wege ist. Auf diese Weise ist sichergestellt, daß der gesamte Überlauf der Wanne 123 durch das Überlaufrohr in die nächst darunter gelegene Schale läuft und so fort, bis sich der restliche Überlauf ganz unten in dem trichterförmig ausgebildeten Bodenteil 130 des Behälters 121 sammelt. Von dort führt eine absperrbare Ableitung 131 in die Rohrbrandblase 101.

Die Wanne 123 weist einen durch einen Stöpsel 132 verschließbaren Abfluß 133 auf. Der Stöpsel kann über eine Handhabe 134 von außen angehaben und die gezeichnete Verschließstellung wieder zurückgesetzt werden. Auf diese Weise ist es möglich, zu Reinigungszwecken aus der Schale 122 die Flüssigkeit ablaufen zu lassen.

Zwischen den einzelnen Trennstufen sind Bruseköpfe 135, 136, 137 angeordnet, die an eine äußere Druckwasserleitung anschließbar sind. Ein weiterer Brausekopf 140 ist wie aus Figur 5 ersichtlich am obersten Ende des Abscheiders innerhalb des Abscheiders angeordnet und an die gleiche Druckwasserleitung 138 angeschlossen. Die äußere Druckwasserleitung ist durch ein verstellbares Ventil 139 absperrbar. In Figur 8 sind einige Rohre 141, 142 des Durchlaufkühlers 143, die den Rohren 40 aus Figur 2 entsprechen, augedeutet. Die Anlage wird entsprechend betrieben, wie für die Anlage aus Figur 1 beschrieben.

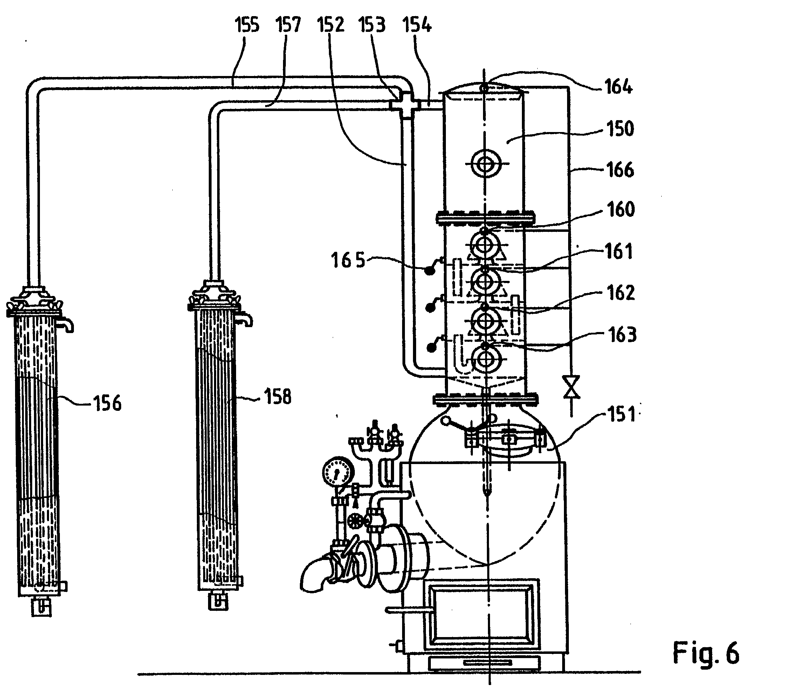

Bei dem in Figur 6 dargestellten Ausführungsbeispiel fehlt gegenüber Figur 5 der Brennkesselhut und stattdessen ist der Abscheider 150 direkt auf die Rohrbrandblase 151 aufgesetzt. Vom unteren Ende des Abscheiders geht eine erste Leitung 152 aus, die zu einem Mehrwegeventil 153 führt.

Vom oberen Ende des Abscheiders geht eine zweite Leitung 154 aus, die zu dem gelichen Mehrwegeventil 153 führt. Von dem Mehrwegeventil 153 geht eine Leitung 155 zu dem Rohrbrandkühler 156 und eine andere Leitung 157 zu dem Kondensator 158. Während des Vorlaufs und während des Nachlaufs ist das Mehrwegeventil 153 auf Durchlauf geschaltet von der Leitung 152 zur Leitung 155. Die Leitungen 154 und 157 sind abgesperrt. Während des Mittellaufs ist das Ventil eine Durchlaufverbindung zwischen der Leitung 154 und der Leitung 157, während die Leitungen 152 und 155 abgesperrt sind. Der Geist gelangt zunächst in das unterste Ende des Abscheiders und in Vorlaufstellung des Mehrwegeventils verläßt er den Absscheider sofort und strömt über die Leitungen 152, 155 an den Rohrbrandkühler 156. Während des Mittellaufs dagegen durchstrômt der Geist den Abscheider 150, wird dabei gereinigt und gelangt dann über die Leitungen 154 und 157 an den Kondensator 158. Der Abscheider 150 ist ausgebildet, wie in Figur 8 dargestellt und im Text zu Figur 8 beschrieben. Die Brausköpfe sind mit 160 bis 164 bezeichnet und eine der Handhabe 134 entsprechende Handhabe ist mit 165 bezeichnet. Die Druckwasserleitung für die Brausköpfe ist mit 166 bezeichnet. Abgesehen von den beschriebenen Unterschieden ist das Ausführungsbeispiel nach Figur 6 genauso ausgebildet wie das nach Figur 5 und wird auch genauso betrieben.

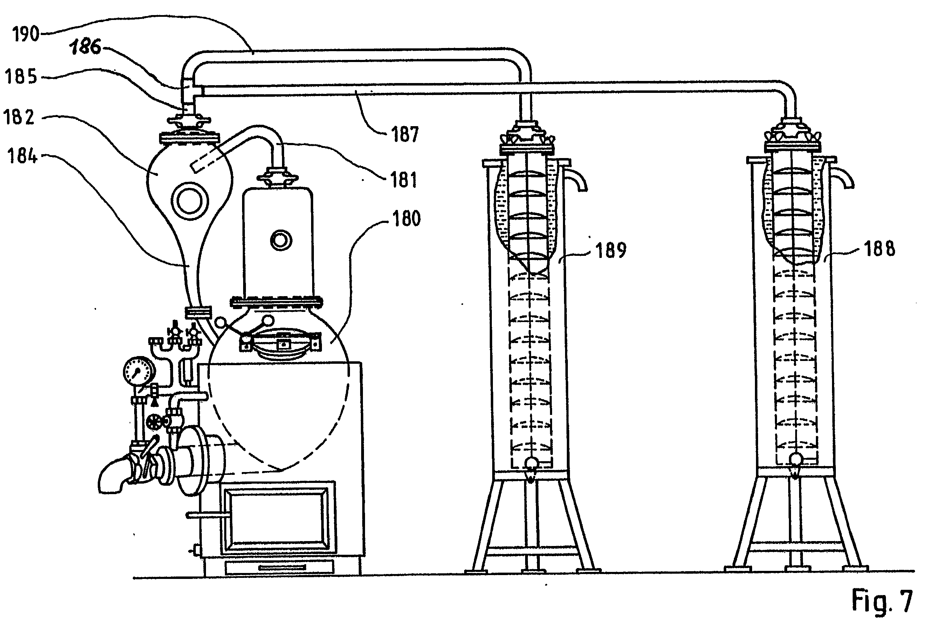

Bei dem in Figur 7 dargestellten Ausführungsbeispiel fehlt gegenüber Figur 1 der Abscheider. Es ist eine der Rohrbrandblase 1 entsprechende Rohbandblase 180 vorgesehen, von der eine Geistleitung 181 an einen Vorabscheider 182 führt, von dem eine Abscheideleitung 184 in die Rohrbrandblase 180 zurückführt. Von dem Vorabscheider 182 geht die erste Geistleitung 185 aus, die zu einem Dreiwegeventil 186 führt. Von dem Dreiwegeventil führt ein erste Zweig 187 zu einem Rohrbrandkühler 188 und ein zweiter Zweig 190 zu einem Kondensator 189. Der Vorlauf und der Nachlauf gelangen durch entsprechende Einstellung des Ventils 186 in den Rohrbrandkühler 188, während der Mittellauf durch entsprechende andere Einstellung des Ventils 186 in den Kondensator 189 gelangt. Da bei diesem Ausführungsbeispiel gegenüber Figur 1 ein, dem Abscheider 9 entsprechender Abscheider fehlt, ist der am Kondensator 189 anfallende Trinkbrandwein unter Umständen noch nicht hinreichend rein, er kann dann um einen höheren Reinheitsgrad zu erzielen, in der gleichen Anlage noch einmal destilliert werden, in dem man wieder Vorlauf und Rücklauf durch entsprechende Einstellung des Ventils 186 vom Kondensator 189 fernhält.

**Patentansprüche**

1. Verfahren zur chargenweisen Gewinnung von Branntwein, bei welchem vergorene Früchte oder Fruchtsäfte unter Bildung von Rohdampf erhitzt, der Rohdampf in einer vorzugsweise als Destillationskolonne ausgebildeten Abscheidestrecke von Fuselprodukten gereinigt und an einer Kühlfläche kondensiert wird und Vorlauf des Destillats an einer gesonderten Kühlfläche niedergeschlagen wird, dadurch gekennzeichnet, daß das Destillat eines jeden Durchlaufs in drei, den Vorlauf, den Mittellauf und den Nachlauf bildende Fraktionen getrennt wird, die jeweils das gesamte in einem zugehörigen Zeitabschnitt anfallende Destillat umfassen, und daß der Vorlauf und der Nachlauf einerseits und der Mittellauf andererseits an verschiedenen, räumlich voneinander getrennten und durch mindestens ein Absperrorgan zuströmseitig gegeneinander absperrbare Kühlflächen kondensiert und getrennt abgeleitet wird.

2. Verfahren nach Anspruch 1, dadurch gekennzeichnet, daß der Rohdampf in der Vor- und Nachlaufphase vor Eintritt in die Abscheidestrecke abgezweigt und unmittelbar an der zugehörigen Kühlfläche kondensiert wird.

3. Verfahren nach einem der Ansprüche 1 bis 2, dadurch gekennzeichnet, daß der Vor- und Nachlauf unter Verwendung des Verfahrens nach einem der vorhergehenden Ansprüche vollständig nachdestilliert wird.

4. Vorrichtung zum Gewinnen von Branntwein aus vergorener Brennmaische zur Ausübung des Verfahrens der vorhergehenden Ansprüche mit einer Rohrbrandblase (1) zum Destillieren der Brennmaische, mit einem Abscheider (9) zum Reinigen des Dampfes von Fusel, der über eine dampffördernde erste Geistleitung (5) an die Rohrbrandblase angeschlossen ist, und mit einem Kondensator (11) zum Kondensieren des gereinigten Dampfes, der über eine den gereinigten Dampf fördernde zweite Geistleitung (10) an den Abscheider (9) angeschlossen ist, dadurch gekennzeichnet, daß ein Rohrbrandkondensator (14, 74) vorgesehen ist und daß in der ersten Geistleitung (5, 65) ein Umschaltventil (6, 66) vorgesehen ist, über das diese erste Geistleitung wahlweise an die Eingangsseite des Abscheiders (9, 69) oder des Rohrbrandkondensators (14, 74) anschließbar ist.

5. Vorrichtung nach Anspruch 4, dadurch gekennzeichnet, daß ein Kondensatsammelbehälter (13) vorgesehen ist, der unter Zwischenschaltung einer Destilliervorlage (12) an die Ausgangsseite des Kondensators (11) angeschlossen ist, und daß ein Fuselsammelbehälter (16) vorgesehen ist, der unter Zwischenschaltung einer Destilliervorlage (15) an die Ausgangsseite des Rohrbrandkondensators (14) angeschlossen ist.

6. Vorrichtung nach Anspruch 4 oder 5, dadurch gekennzeichnet, daß der obere Teil des Abscheiders (9, 69) als Durchlaufkühler (39) ausgebildet ist, dessen anfallendes Kondensat nach unten tropft.

7. Vorrichtung nach einem der vorhergehenden Vorrichtungsansprüche, dadurch gekennzeichnet, daß der Abscheider (9) ein langgestreckter, aufrechter, geschlossener Behälter (26) ist, an dessen unterem Ende der Zulauf (17) für den Dampf und an dessen oberem Ende ein Ablauf (18) für den gereinigten Dampf vorgesehen ist, daß im unteren Teil des Behälters übereinander mehrere Trennstufen (19 – 23) vorgesehen sind, daß jede Trennstufe eine an der Behälterwandung (26) angrenzende, ringförmige, oben offene Schale (25) aufweist sowie eine sich nur über den mittleren Querschnittsteil des Behälters erstreckende, mit der offenen Seite nach unten weisende Wanne (27) aufweist, die über der Schale angeordnet ist und mit ihrem unteren Rand (28) mit Spiel in die Schale taucht, so daß zwischen dem inneren Rand (29) der Schale und dem unteren Rand der Wanne ein labyrinthartiger Durchgang (30) für den hochsteigenden Dampf offenbleibt, der syphonartig abgesperrt sein kann durch sich in der Schale sammelnden Fusel, daß für jede Trennstufe ein an eine äußere Druckwasserleitung (34) anschließbarer Brausekopf (35) vorgesehen ist, der zentral von unten in die Wanne reicht, und daß für jede ringförmige Schale ein absperrbarer, nach außen führender Fuselabfluß (36) vorgesehen ist, der in den Fuselsammelbehälter (16) führt.

8. Vorrichtung nach einem der Ansprüche 4 bis 6, dadurch gekennzeichnet, daß der Abscheider (69) ein langgestreckter, aufrechter, geschlossener Behälter ist, an dessen unterem Teil der Zulauf (68) für den Dampf und an dessen oberem Ende ein Ablauf (78) für den gereinigten Dampf vorgesehen ist, daß das oberste Ende des Behälters (69) ein erster freier Raum (54) ist, der sich über den ganzen Querschnitt des Behälters erstreckt, daß der untere Teil des Behälters ein zweiter freier Raum (55) ist, der sich über den ganzen Querschnitt des Behälters erstreckt, und daß mindestens in einem der freien Räume ein Brausekopf (35, 78, 57) angeordnet ist, der an eine äußere Druckwasserleitung (34, 84) anschließbar ist.

9. Vorrichtung nach einem der vorhergehenden Vorrichtungsansprüche, dadurch gekennzeichnet, daß der Kondensatsammelbehälter (13) ein geschlossener Behälter ist, der mit einem Rührwerk (42) ausgestattet ist, und daß oben an dem Kondensatsammelbehälter ein Dampfauslaß (43) vorgesehen ist.

10. Vorrichtung zum Gewinnen von Branntwein aus vergorener Brennmaische zur Ausübung des Verfahrens nach den Ansprüchen 1 bis 3 mit einer Rohrbrandblase zum Destillieren der Brennmaische und mit einem Kondensator zum Kondensieren des gereinigten Dampfes, der über eine den gereinigten Dampf fördernde zweite Geistleitung an den Abscheider angeschlossen ist, dadurch gekennzeichnet, daß ein Rohrbrandkondensator (188) vorgesehen ist und daß in der ersten Geistleitung (185) ein Umschaltventil (186) vorgesehen ist, über das diese erste Geistleitung wahlweise an die Eingangsstelle des Kondensators (189) oder des Rohrbrandkondensators (188) anschließbar ist.

## Claims

1. Process for the batchwise production of spirit or alcohol, in which fermented fruit or fruit juices are heated, accompanied by the formation of crude or raw vapour, the latter is purified in a separating zone preferably constructed as a distilling column from fusel products and condensed on a cooling surface and the first runnings of the distillate is deposited on a separate cooling surface characterized in that the distillate of each pass is separated into three fractions forming the first, middle and last runnings, which in each case comprise the entire distillate obtained in an associated time portion and that the first and last runnings on the one hand and the middle runnings on the other are condensed and separately led off at different, spatially separated cooling surfaces, which can be cutoff from one another on the inflow side by at least one cutoff device.

2. Process according to claim 1, characterized in that the crude vapour in the first and last running phase is branched off prior to entering the separating zone and directly condensed on the associated cooling surface.

3. Process according to one of the claims 1 and 2, characterized in that, using the process according to one of the preceding claims, the first and last runnings are completely after-distilled.

4. Apparatus for obtaining alcohol or spirits from fermented distilling mash for performing the process according to the preceding claims with a crude still (1) for distilling the distillery mash, with a separator (9) for fusel-purification of the vapour and which is connected by means of a vapour-conveying, first spirit line (5) to the still and with a condenser (11) for condensing the purified vapour and which is connected by means of a second spirit line (10) conveying the purified vapour to the separator (9), characterized in that a crude distilling condenser (14, 74) is provided a changeover valve (6, 66), which can be connected by means of said first spirit line either to the inlet side of separator (9, 69) or to the condenser (14, 74).

5. Apparatus according to claim 4, characterized in that a condensate collector (13) is provided which, accompanied by the interposing of a distillation receiver (12), is connected to the outlet side of the condenser (11) and that a fusel collector (16) is provided which, accompanied by the interposing of a distillation receiver (15), is connected to the outlet side of the condenser (14).

6. Apparatus according to claims 4 or 5, characterized in that the upper part of the separator (9, 69) is constructed as a continuous cooler (39), whose condensate drips downwards.

7. Apparatus according to one of the preceding apparatus claims, characterized in that the separator (9) is an elongated, upright, closed container (26), at whose lower end is provided the vapour inlet (17) and at whose upper end is provided the purified steam outlet (18), that in the lower part of the container are provided several superimposed separating stages (19–23), that each separating stage has an annular, upwardly open tray (25) adjacent to the container wall (26), as well as a tank (27) with the open side directed downwards and only extending over the central cross-sectional part of the container, which is positioned over the tray and whose lower edge (28) is immersed with clearance into the tray, so that between the inner tray edge (29) and the lower tank edge is left open a labyrinth-like passage (30) for the rising vapour, which can be shut off in siphon-like manner by fusel collecting in the tray, that for each separating stage is provided a sprinkler head (35) connectable to an external pressure water line (34) and which extends centrally from the bottom into the tank and that for each annular tray is provided a fusel drain (36), which can be shut off, passes to the outside and leads into the fusel collector (16).

8. Apparatus according to one of the claims 4 to 6, characterized in that the separator (69) is an elongated, upright and closed container, on whose lower part is provided the vapour inlet (68) and on whose upper end is provided a purified steam outlet (78), that the top end of the container (69) is a first free space (54) extending over the entire cross-section of the container, that the bottom end of the container is a second free space (55) extending over the entire cross-section of the container and that at least in one of the free spaces is provided a sprinkler head (35, 78, 57), which is connectable to an external pressure water line (34, 84).

9. Apparatus according to one of the preceding claims, characterized in that the condensate collector (13) is a closed container equipped with a stirrer (42) and that a vapour outlet (43) is provided at the top of the condensate collector.

10. Apparatus for obtaining alcohol or spirits from fermented distillery mash for performing the process according to claims 1 to 3 with a crude still for distilling the distillery mash and with a condenser for condensing the purified vapour connected to the separator by means of a second spirit line conveying the purified vapour, characterized in that a crude distilling condenser (188) is provided and that in the first spirit line (185) is provided a changeover valve (186), by means of which said first spirit line can be connected either to the inlet of condenser (185) or the crude distilling condenser (188).

**Revendications**

1. Procédé pour la production discontinue d'eau-de-vie, dans lequel on chauffe des fruits ou des jus de fruits fermentés avec formation de vapeur brute, on débarrasse la vapeur brute du fusel sur une section de séparation qui est réalisée de préférence sous la forme d'une colonne de distillation et on la condense sur une surface de refroidissement, et on précipite l'avant-coulant du distillat sur une surface de refroidissement séparée, caractérisé par le fait que: on sépare le distillat de chaque passage en trois fractions qui constituent l'avant-coulant, la fraction intermédiaire et l'après-coulant et qui comprennent à chaque fois l'ensemble du distillat qui est produit dans un intervalle de temps correspondant, et: on déverse séparément l'avant-coulant et l'après-coulant, d'une part, et la fraction intermédiaire d'autre part, après condensation sur des surfaces de refroidissement différentes, qui sont séparées l'une de l'autre dans l'espace et qui peuvent être fermées l'une par rapport à l'autre en amont grâce à un organe de fermeture au moins.

2. Procédé selon la revendication 1, caractérisé par le fait: que, dans la phase de l'avant-coulant et de l'après-coulant, on dévie la vapeur brute avant son entrée dans la section de séparation et on la condense directement sur la surface de refroidissement associée.

3. Procédé selon l'une des revendications 1 à 2, caractérisé par le fait que: on soumet l'avant-coulant et l'après-coulant à une redistillation complète en utilisant le procédé selon l'une des revendications précédentes.

4. Dispositif pour la production d'eau-de-vie à partir de moûts fermentes mettant en œuvre le procédé des revendications précédentes, comprenant une cucurbite (1) pour la distillation du moût, comprenant un séparateur (9) pour débarrasser la vapeur du fusel, lequel est relié à la cucurbite par un premier colde-cygne (5) de transport de la vapeur, et: comprenant un condenseur (11) pour condenser la vapeur purifiée, lequel est relié au séparateur (9) par un second col-de-cygne (10) de transport de la vapeur purifiée, caractérisé par le fait: qu'il est prévu un condenseur d'alcool brut (14, 74), et: qu'il est prévu sur le premier col-de-cygne (5, 65) une vanne de commutation (6, 66) au moyen de laquelle ce premier col-de-cygne peut être raccordé au choix à l'entrée du séparateur (9, 69) ou du condenseur d'alcool brut (14, 74).

5. Dispositif selon la revendication 4, caractérisé par le fait: qu'il est prévu un réservoir collecteur de condensat (13) qui est raccordé à la sortie du condenseur (11) avec interposition d'un récipient (12), et: qu'il est prévu un réservoir collecteur de fusel (16) qui est raccordé à la sortie du condenseur d'alcool brut (14) avec interposition d'un récipient (15).

6. Dispositif selon la revendication 4 ou 5, caractérisé par le fait que la partie supérieure du séparateur (9, 69) est réalisée sous la forme d'un condenseur à passage continu (39) ou le condensat qui se forme s'egoutte vers le bas.

7. Dispositif selon l'une des revendications de dispositif précédentes, caractérisé par le fait: que le séparateur (9) est une enceinte (26) allongée, verticale et fermée, à l'extrémité inférieure de laquelle est prévue l'arrivée (17) de la vapeur, et à l'extrémité supérieure de laquelle est prévue une sortie (18) pour la vapeur purifiée, qu'il est prévu plusieurs étages séparateurs superposés (19 à 23) dans la partie inférieure de l'enceinte, que chaque étage séparateur comporte une cuvette annulaire (25) ouverte vers le haut et adjacente à la paroi de l'enceinte (26), ainsi qu'une calotte (27) dont le côté ouvert est tourné vers le bas, qui s'étent seulement sur la partie centrale de la section transversale de l'enceinte, qui est disposée au-dessus de la cuvette et qui, par son bord inférieur (28), plonge dans la cuvette avec un jeu, de sorte qu'entre le bord intérieur (29) de la cuvette et le bord inférieur de la calotte, un passage en forme de labyrinthe (30) reste ouvert pour la vapeur montante et qu'il puisse être fermé à la manière d'un siphon par le fusel qui se rassemble dans la cuvette, qu'il est prévu pour chaque étage séparateur une tête d'arrosage (35) qui peut être raccordée à une conduite extérieure d'eau sous pression (34) et qui pénètre centralement dans la calotte depuis le bas, et: qu'il est prévu pour chaque cuvette annulaire une sortie de fusel (36) qui peut être fermée, et qui conduit vers l'extérieur dans le réservoir collecteur de fusel (16).

8. Dispositif selon l'une des revendications 4 à 6, caractérisé par le fait: que le séparateur (69) est une enceinte allongée, verticale et fermée, à l'extrémité inférieure de laquelle est prévue l'arrivée (68) de la vapeur, et à l'extrémité supérieure de laquelle est prévue une sortie (78) pour la vapeur purifiée, que l'extrémité supérieure de l'enceinte (69) est un premier espace libre (54) qui s'étend sur toute la section transversale de l'enceinte, et: qu'une tête d'arrosage (35, 78, 57) pouvant être reliée à une conduite extérieure d'eau sous pression (34, 84) est disposée dans l'un au moins des éspaces libres.

9. Dispositif selon l'une des revendications de dispositif précédentes, caractérisé par le fait: que le réservoir collecteur de condensat (13) est une enceinte fermée qui est équipée d'un agitateur (42), et: qu'il est prévu une sortie de vapeur (43) sur le dessus du réservoir collecteur de condensat.

10. Dispositif pour la production d'eau-de-vie à partir de moûts fermentés mettant en œuvre le procédé des revendications 1 à 3, comprenant une cucurbite pour la distillation du moût, et: comprenant un condenseur pour condenser la vapeur purifiée, lequel est relié au séparateur par un second col-de-cygne de transport de la vapeur purifiée, caractérisé par le fait: qu'il est prévu un condenseur d'alcool brut (188), et: qu'il est prévu dans le premier col-de-cygne (185) une vanne de commutation (186) au moyen de laquelle ce premier col-de-cygne peut être raccordé au choix à l'entrée du condenseur (189) ou du condenseur d'alcool brut (188).

Fig. 1

EP 0 243 535 B1

Fig. 2

Fig. 3

Fig. 4

Fig. 5

EP 0 243 535 B1

Fig. 6

Fig. 7

EP 0 243 535 B1

142

141

143

135

121

123

124

126

132

125

134

127

130

128

122

133

136

129

138

139

137

Fig. 8